# EUROPEAN PATENT SPECIFICATION

(11) **EP 3 810 949 B1**
(45) Date of publication and mention of the grant of the patent: **24.08.2022**
(21) Application number: 19742940.0
(22) Date of filing: 20.06.2019
(51) Int. Cl.: F16D 55/2265

(54) **DISC BRAKE CALIPER**
SCHEIBENBREMSSATTEL
ÉTRIER DE FREIN À DISQUE

(30) Priority: 21.06.2018 IT 201800006539
(43) Date of publication of application: 28.04.2021
(73) Proprietor: BREMBO S.p.A., 24035 Curno (BERGAMO) (IT)
(72) Inventor: BOSIS, Alberto, I-24035 Curno (BERGAMO) (IT); CORNARA, Filippo, I-24035 Curno (BERGAMO) (IT)
(74) Representative: Busana, Omar
(86) International application number: PCT/IB2019/055221
(87) International publication number: WO 2019/244101

(56) References cited:
- EP-A1- 2 942 541
- DE-A1-102007 008 728
- DE-A1-102014 019 113
- DE-A1-102014 115 765
- US-A- 4 144 952
- US-A1- 2008 093 181

## Description

### FIELD OF APPLICATION

The present invention relates to a disc brake caliper, and in particular to a caliper of the floating type. Such a caliper is for instance known from DE-A-10 2014 019113.

### BACKGROUND ART

It is well known to make disc brake calipers of floating type, in which the caliper body, arranged straddling the brake disc, is connected in floating manner to a bracket which achieves the fastening of the caliper to a fixed support.

The braking action is performed by means of thrust means, e.g. pistons, arranged on the inside of the caliper, which press the at least one pad of the inner side against the brake disc at an inward facing surface.

The caliper body, which is connected in floating manner, under the thrust action of the pistons, moves in the opposite direction, translating axially with respect to the bracket, and pulling the at least one pad of the outer side against the brake disc, on a surface opposite to the previous one, and facing outwards.

The sliding of the caliper body with respect to the bracket is achieved by means of coupling means adapted to allow the respective sliding in axial direction between the caliper body and the bracket.

The coupling means substantially comprise two pins provided on the bracket and two corresponding guide seats provided on the caliper body.

Both the pins and the seats have axes substantially parallel to the axial direction along which the relative sliding occurs.

In some embodiments, the position can be inverted with respect to the previous one, i.e. the two pins can be provided at the caliper and the two corresponding guide seats may be provided on the bracket.

The prior art, although widely appreciated, is not without drawbacks.

Indeed, the sliding between the pin and the respective guide seat causes a fairly high residual torque. The sliding occurs between the seat, e.g. arranged in the caliper body, therefore made of cast iron, and the pin, connected to the bracket, e.g. made of stainless steel. The coupling between these two materials results in a friction coefficient of about 0.12.

### PRESENTATION OF THE INVENTION

The need is therefore felt to solve the drawbacks and limitations mentioned above with reference to the prior art.

Therefore, the need is felt to provide a disc brake caliper, and in particular a floating caliper, wherein the friction coefficient due to the relative sliding between bracket and caliper body is drastically reduced compared to the prior art.

Such requirement is at least partially fulfilled by a disc brake caliper in accordance with claim 1.

In particular, such need is met by a disc brake caliper adapted to be associated with a brake disc, said caliper being of the floating type comprising a caliper body and a bracket; said bracket comprising means for fastening the caliper to a relative support; said caliper body sliding in relation to the bracket in an axial direction; said caliper comprising coupling means between said caliper body and said bracket adapted to allow the mutual relative sliding, parallel to the axial direction; wherein the coupling means comprise at least one guide pin and at least one guide seat arranged respectively on said bracket and said caliper body or respectively on said caliper body and on said bracket; wherein said coupling means comprise:
- at least one bushing provided between said guide pin and said guide seat; and
- axial retention means for said at least one bushing adapted to limit or prevent the axial sliding of said at least one bushing with respect to said guide seat.

According to a possible embodiment, the coupling means comprise at least one guide pin and at least a corresponding guide seat respectively arranged on said bracket and said caliper body.

According to a possible embodiment, said coupling means comprise a guide pin and a corresponding guide seat, and a fixing pin adapted to prevent the rotation of the caliper body about the guide pin.

According to a possible embodiment, at least one bushing is made of steel coated with polytetrafluoroethylene (PTFE).

According to a possible embodiment, the guide pin comprises a sleeve provided with a fixing core, said sleeve forming the coupling surface of the guide pin with at least one bushing.

According to a possible embodiment, the bushings are two in number, axially aligned along a direction parallel to the axial direction.

According to the invention, the axial retention means comprise inner retention means and outer retention means.

According to a possible embodiment, the inner retention means comprise a narrowing of the guide seat.

According to the invention, the outer retention means comprise a circumferential seat and a corresponding stop ring.

According to a possible embodiment, the at least one bushing comprises at least one chamfered end for coupling with said axial retention means.

### DESCRIPTION OF THE DRAWINGS

Further features and advantages of the present invention will be more comprehensible from the following description of preferred embodiments given by way of nonlimiting examples, in which:
- figure 1 shows a diagrammatic perspective view of a disc brake caliper in a partially exploded configuration;
- figure 2 shows a diagrammatic section view of a disc brake caliper according to the present invention; and
- figures 3 and 4 diagrammatically show two enlarged parts of the portion shown in figure 2.

Elements or parts in common to the embodiments described below will be indicated using the same reference numerals.

### DETAILED DESCRIPTION

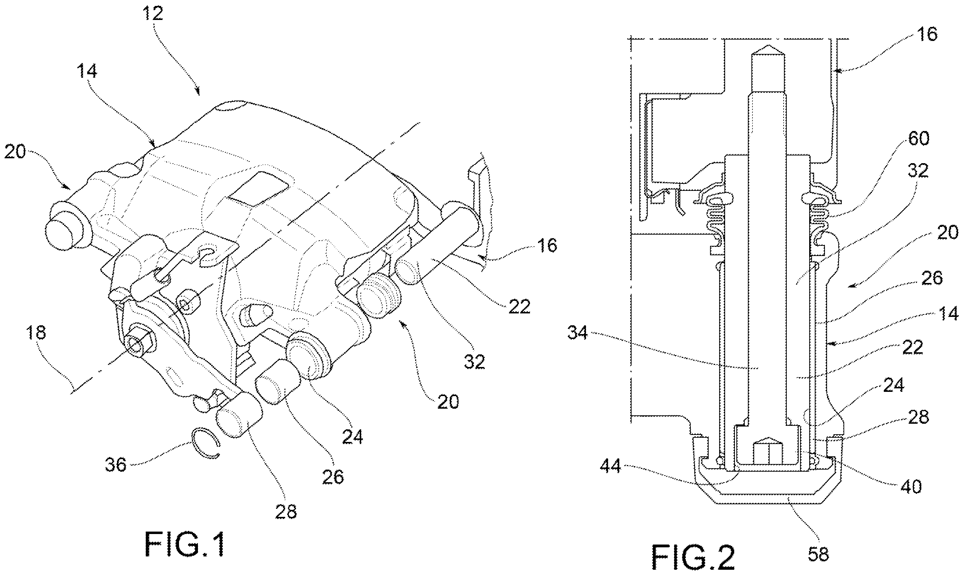

In figure 1, reference numeral 12 indicates as a whole a disc brake caliper adapted to be associated with a brake disc, which hereafter will be indicated as caliper 12.

The caliper 12 is of the floating type, and comprises a caliper body 14 and caliper bracket 16. The bracket 16 comprises fastening means (not shown) of the caliper 12 to a respective support (not shown).

As the caliper 12 is of floating type, the caliper body 14 slides in relation to the bracket 16 in an axial direction 18. With this regard, the caliper 12 comprises coupling means 20 between the caliper body 14 and the bracket 16 adapted to allow the mutual relative sliding, parallel to the axial direction 18.

The coupling means 20 comprise at least one guide pin 22 and at least one guide seat 22.

According to a possible embodiment, shown in the accompanying figures, at least one guide pin 22 and at least one guide seat 22 are arranged on the bracket 16 and on the caliper body 14, respectively, in corresponding positions.

According to alternative embodiments, the at least one guide pin 22 and the at least one guide seat 22 are arranged in corresponding positions on the caliper body 14 and bracket 16, respectively.

The caliper 12 may comprise only one guide pin 22 and a corresponding guide seat 24. In this embodiment, the coupling means further comprise a fixing pin adapted to prevent the rotation of the caliper body about the guide pin.

The coupling means 20 comprise:
- at least one bushing 26, 28 provided between said guide pin 22 and said guide seat 24; and
- axial retention means 30 for said at least one bushing 26, 28 adapted to either limit or prevent the axial sliding of said at least one bushing 26, 28 with respect to said guide seat 24.

According to a possible embodiment of the present invention, the at least one bushing can be made of steel coated with polytetrafluoroethylene (PTFE), such as the one marketed under the trademark Teflon^{®}. In alternative embodiments, at least one bushing can be made of sintered bronze or completely of hard polymer material.

Therefore, the surfaces in contact during the relative sliding between caliper body 14 and bracket 16 are the inner surface of the bushing 26, 28, and the outer surface of the guide pin 22.

In this regard, according to a possible embodiment of the present invention, the guide pin 22 may comprise a sleeve 32 comprising a fixing core 34. In this case, the sleeve 32 is the coupling surface of the guide pin 22 with at least one bushing 26, 28.

The sleeve may be made of steel, e.g. stainless steel, or hardened and tempered steel, case-hardened steel, carbonitrided steel, nickel-plated steel.

The sleeve 32 can be made in the form of a hollow cylinder, wherein the fixing core 34 is provided inside the cavity, which protrudes from one end of the sleeve 32 to be connected. According to a possible embodiment, the end 36 of the fixing core 34 may be threaded and therefore adapted to be screwed into a corresponding threaded seat 38. In the embodiment shown in figure 2, the threaded seat is placed at a portion of the bracket 16.

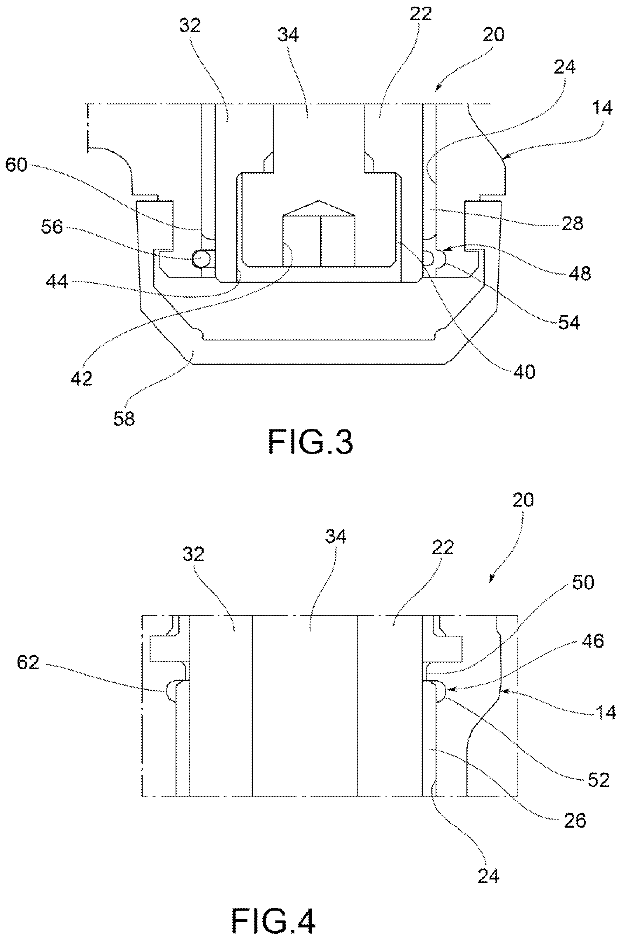

The fixing core 34 may comprise a head 40 which comprises a gripping portion 42 to perform the aforesaid screwing. In the embodiment shown in figure 3, the gripping portion 42 is a recessed hexagon.

Advantageously, sleeve 32 may comprise a seat 44 for head 40 so that the latter is recessed into sleeve 44.

With reference to figure 2, the bushings 26, 28 may be two, axially aligned along a direction parallel to the axial direction 18.

With reference to figures 3 and 4, it will now describe a possible embodiment of the axial retention means 30.

As defined above, the axial retention means 30 either limit or prevent the axial sliding of at least one bushing 26, 28 with respect to the guide seat 24.

The axial sliding can be towards the inside of the caliper 12, i.e. towards the bracket 16, or towards the outside, i.e. in the opposite direction.

According to the present invention, the axial retention means 30 comprise inner retention means 46 and outer retention means 48.

The inner retention means 46 are adapted to prevent the axial sliding of the bushing towards the bracket 16. The outer retention means 48 are adapted to prevent the axial sliding of the bushing in direction opposite to the bracket 16.

According to a possible embodiment of the present invention, the inner retention means 46 may comprise a narrowing 50 of the guide seat 24. Advantageously, the guide seat 24 may comprise a recess 52 near the narrowing 50.

According to a possible embodiment of the present invention, shown in figure 4, the narrowing may be made by narrowing the guide seat 24.

According to alternative embodiments, the narrowing of the drive seat 24 may be partial, and therefore concern at least partially the circumference.

According to an alternative embodiment, not shown in the accompanying figures, the narrowing 50 may be obtained by means of a snap ring inserted in a corresponding circumferential seat made in the guide seat 24.

According to the present invention, the outer retention means 48 comprise a circumferential seat 54 and a corresponding stop ring 56.

Advantageously, the circumferential seat may be arranged near the outer end of the guide seat.

Advantageously, the stop ring 56 is a split elastic ring made of steel, which can therefore be deformed to be inserted inside the circumferential seat 54, then expand inside the seat itself.

According to alternative embodiments, the outer retention means may comprise: Seeger rings of alternative shapes, threaded ring nuts, threads caps with appropriately shape with abutment surface, etc.

In manner known in itself, the caliper 12 further comprises an end cap 58 at the end of the guide seat 24, through which the coupling means are mounted.

Additionally, the caliper 12 may comprise a dust seal 60 between guide pin 22 and guide seat 24.

According to a possible embodiment of the present invention, the ends of the bushings 26, 28, which in use are directed towards the axial retention means 30, may comprise chamfered ends 60, 62.

For example, the chamfered end 60 of the bushing 28 causes the bushing 28 itself to press the stop ring 56 into its circumferential seat 54 if the bushing 28 itself moves towards the stop ring 56, thereby preventing the axial extension of the bushing.

According to the distance between at least one bushing and the axial retention means, limited displacements of the bushing relative to the seat may be either permitted or prevented.

The advantages which can be achieved by a caliper according to the present invention are therefore apparent.

First of all, with the use of bushings according to the present invention, the friction coefficient due to the sliding between the bracket and the caliper body is greatly reduced. In particular, the friction coefficient changes to a value of about 0.01 when using PTFE.

Furthermore, the axial retention means allow a safer locking inside the corresponding guide seat than the coupling by interference required by the known bushing technique. However, in addition to the retention means, at least one bushing may also be provided by means of a coupling with interference in the respective seat.

Advantageously, the sliding of at least one bushing inside the seat is prevented on the one hand by the narrowing and on the other by the presence of the stop ring inside the circumferential housing.

In the embodiments described above, a person skilled in the art will be able to make changes and or substitutions of elements described with equivalent elements without departing from the scope of the appended claims in order to satisfy specific requirements.

## Claims

1. Disc brake caliper (12) suitable for being associated with a brake disc, said caliper (12) being of the floating type comprising a caliper body (14) and a bracket (16); said bracket (16) comprising means for fastening the caliper (12) to a relative support; said caliper body (14) sliding in relation to the bracket (16) in an axial direction (18);
said caliper (12) comprising means of coupling (20) between said caliper body (14) and said bracket (16) suitable to permit the relative sliding between them, parallel to the axial direction (18);
wherein the coupling means (20) comprise at least one guide pin (22) and at least one guide seat (24) placed respectively on said bracket (16) and said caliper body (14) or respectively on said caliper body (14) and on said bracket (16);
wherein said coupling means comprise:
- at least one bushing (26, 28) placed between said guide pin (22) and said guide seat (24); and
- axial retention means (30) for said at least one bushing (26) suitable to limit or prevent the axial sliding of said at least one bushing (26, 28) with respect to said guide seat (24);
**characterized in that**
the axial retention means (30) comprise inner retention means (46) and outer retention means (48); and wherein the outer retention means (48) comprise a circumferential seat (54) and a corresponding stop ring (56) .

2. Caliper (12) according to the preceding claim, **characterized in that** the coupling means (20) comprise at least one guide pin (22) and at least a corresponding guide seat (24) respectively arranged on said bracket (16) and said caliper body (14).

3. Caliper (12) according to any of the preceding claims, **characterized in that** said coupling means (20) comprise a guide pin (22) and a corresponding guide seat (24), and a fixing pin suitable to prevent rotation of the caliper body around the guide pin (22).

4. Caliper (12) according to any of the preceding claims, **characterized in that** the at least one bushing (26, 28) is made of steel coated with polytetrafluoroethylene (PTFE).

5. Caliper (12) according to any of the preceding claims, **characterized in that** the guide pin (22) comprises a sleeve (32) provided with a fixing core (34), said sleeve (32) forming the coupling surface of the guide pin (22) with at least one bushing (26, 28).

6. Caliper (12) according to any one of the preceding claims, **characterized in that** the bushings (26, 28) are two in number, axially aligned along a direction parallel to the axial direction (18).

7. Caliper (12) according to any one of the preceding claims, **characterized in that** the inner retention means (46) comprise a narrowing (50) of the guide seat (24).

8. Caliper (12) according to claims 7, **characterized in that** the at least one bushing (26, 28) comprises at least one chamfered end (60, 62) for coupling with said axial retention means (30).

## Patentansprüche

1. Scheibenbremssattel (12), welcher dazu geeignet ist, einer Bremsscheibe zugeordnet zu sein, wobei der Sattel (12) vom schwimmenden Typ ist, umfassend einen Sattelkörper (14) und einen Halter (16); wobei der Halter (16) Mittel zum Befestigen des Sattels (12) an einer relativen Halterung umfasst; wobei der Sattelkörper (14) im Hinblick auf den Halter (16) in einer axialen Richtung (18) gleitet;
wobei der Sattel (12) Mittel eines Koppelns (20) zwischen dem Sattelkörper (14) und dem Halter (16) umfasst, welche dazu geeignet sind, das relative Gleiten zwischen diesen, parallel zu der axialen Richtung (18), zu erlauben;
wobei die Kopplungsmittel (20) wenigstens einen Führungsstift (22) und wenigstens einen Führungssitz (24) umfassen, welche an dem Halter (16) bzw. dem Sattelkörper (14) oder an dem Sattelkörper (14) bzw. an dem Halter (16) platziert sind;
wobei die Kopplungsmittel umfassen:
- wenigstens eine Buchse (26, 28), welche zwischen dem Führungsstift (22) und dem Führungssitz (24) platziert ist; und
- axiale Haltemittel (30) für die wenigstens eine Buchse (26), welche dazu geeignet sind, das axiale Gleiten der wenigstens einen Buchse (26, 28) in Bezug auf den Führungssitz (24) zu begrenzen oder zu verhindern;
**dadurch gekennzeichnet, dass** die axialen Haltemittel (30) innere Haltemittel (46) und äußere Haltemittel (48) umfassen; und
wobei die äußeren Haltemittel (48) einen umlaufenden Sitz (54) und einen entsprechenden Anschlagring (56) umfassen.

2. Sattel (12) nach dem vorhergehenden Anspruch, **dadurch gekennzeichnet, dass** die Kopplungsmittel (20) wenigstens einen Führungsstift (22) und wenigstens einen entsprechenden Führungssitz (24) umfassen, welche an dem Halter (16) bzw. dem Sattelkörper (14) angeordnet sind.

3. Sattel (12) nach einem der vorhergehenden Ansprüche, **dadurch gekennzeichnet, dass** die Kopplungsmittel (20) einen Führungsstift (22) und einen entsprechenden Führungssitz (24) sowie einen Fixierungsstift umfassen, welcher dazu geeignet ist, eine Rotation des Sattelkörpers um den Führungsstift (22) zu verhindern.

4. Sattel (12) nach einem der vorhergehenden Ansprüche, **dadurch gekennzeichnet, dass** die wenigstens eine Buchse (26, 28) aus mit Polytetrafluorethylen (PTFE) beschichtetem Stahl hergestellt ist.

5. Sattel (12) nach einem der vorhergehenden Ansprüche, **dadurch gekennzeichnet, dass** der Führungsstift (22) eine Hülse (32) umfasst, welche mit einem Fixierungskern (34) bereitgestellt ist, wobei die Hülse (32) die Kopplungsfläche des Führungsstifts (22) mit wenigstens einer Buchse (26, 28) bildet.

6. Sattel (12) nach einem der vorhergehenden Ansprüche, **dadurch gekennzeichnet, dass** die Buchsen (26, 28) zwei an der Zahl sind und entlang einer zu der axialen Richtung (18) parallelen Richtung axial ausgerichtet sind.

7. Sattel (12) nach einem der vorhergehenden Ansprüche, **dadurch gekennzeichnet, dass** die inneren Haltemittel (46) eine Verengung (50) des Führungssitzes (24) umfassen.

8. Sattel (12) nach Anspruch 7, **dadurch gekennzeichnet, dass** die wenigstens eine Buchse (26, 28) wenigstens ein abgeschrägtes Ende (60, 62) zum Koppeln mit den axialen Haltemitteln (30) umfasst.

## Revendications

1. Etrier de frein à disque (12) apte à être associé à un disque de frein, ledit étrier (12) étant de type flottant comprenant un corps d'étrier (14) et un support (16) ; ledit support (16) comprenant un moyen de fixation de l'étrier (12) à un soutien relatif; ledit corps d'étrier (14) coulissant par rapport au support (16) dans une direction axiale (18) ;
ledit étrier (12) comprenant un moyen de couplage (20) entre ledit corps d'étrier (14) et ledit support (16) apte à permettre le coulissement relatif entre eux, parallèlement à la direction axiale (18) ;
dans lequel le moyen de couplage (20) comprend au moins une broche de guidage (22) et au moins un siège de guidage (24) placés respectivement sur ledit support (16) et ledit corps d'étrier (14) ou respectivement sur ledit corps d'étrier (14) et sur ledit support (16) ;
dans lequel ledit moyen de couplage comprend :
- au moins une bague (26, 28) placée entre ladite broche de guidage (22) et ledit siège de guidage (24) ; et
- un moyen de retenue axiale (30) pour ladite au moins une bague (26) apte à limiter ou interdire le coulissement axial de ladite au moins une bague (26, 28) par rapport audit siège de guidage (24) ;
**caractérisé en ce que**
le moyen de retenue axiale (30) comprend un moyen de retenue intérieur (46) et un moyen de retenue extérieur (48) ; et
dans lequel le moyen de retenue extérieur (48) comprend un siège circonférentiel (54) et un anneau de butée (56) correspondant.

2. Etrier (12) selon la revendication précédente, **caractérisé en ce que** le moyen de couplage (20) comprend au moins une broche de guidage (22) et au moins un siège de guidage (24) correspondant agencés respectivement sur ledit support (16) et ledit corps d'étrier (14).

3. Etrier (12) selon l'une quelconque des revendications précédentes, **caractérisé en ce que** ledit moyen de couplage (20) comprend une broche de guidage (22) et un siège de guidage (24) correspondant, et une broche de fixation apte à interdire toute rotation du corps d'étrier autour de la broche de guidage (22).

4. Etrier (12) selon l'une quelconque des revendications précédentes, **caractérisé en ce que** l'au moins une bague (26, 28) est constituée d'acier revêtu de polytétrafluoroéthylène (PTFE).

5. Etrier (12) selon l'une quelconque des revendications précédentes, **caractérisé en ce que** la broche de guidage (22) comprend un manchon (32) pourvu d'une partie centrale de fixation (34), ledit manchon (32) constituant la surface de couplage de la broche de guidage (22) avec au moins une bague (26, 28).

6. Etrier (12) selon l'une quelconque des revendications précédentes, **caractérisé en ce que** les bagues (26, 28) sont au nombre de deux et sont alignées axialement dans une direction parallèle à la direction axiale (18).

7. Etrier (12) selon l'une quelconque des revendications précédentes, **caractérisé en ce que** le moyen de retenue intérieur (46) comprend un rétrécissement (50) du siège de guidage (24).

8. Etrier (12) selon la revendication 7, **caractérisé en ce que** l'au moins une bague (26, 28) comprend au moins une extrémité chanfreinée (60, 62) pour se coupler audit moyen de retenue axiale (30).
